# EUROPEAN PATENT SPECIFICATION

(11) **EP 2 794 388 B1**
(45) Date of publication and mention of the grant of the patent: **31.07.2019**
(21) Application number: 12823207.1
(22) Date of filing: 18.12.2012
(51) Int. Cl.: B62H 3/00, B62H 5/00, E05B 71/00, G07F 17/10

(54) **STATIONING UNIT FOR PARKING A MOTORCYCLE OR A BICYCLE, AND PARKING AREA COMPRISING A PLURALITY OF THESE UNITS**
STATIONIERUNGSEINHEIT ZUM EINPARKEN EINES MOTORRADES ODER EINES FAHRRADES UND PARKBEREICH MIT MEHREREN SOLCHER EINHEITEN
UNITÉ DE STATIONNEMENT PERMETTANT LE STATIONNEMENT D'UNE MOTO OU D'UN VÉLO ET ZONE DE STATIONNEMENT COMPRENANT UNE PLURALITÉ DESDITES UNITÉS

(30) Priority: 21.12.2011 IT TO20110147
(43) Date of publication of application: 29.10.2014
(73) Proprietor: MP Italia S.r.l., 10143 Torino (TO) (IT)
(72) Inventor: SPAGNOLO, Simone, I-10092 Beinasco (Torino) (IT); LERDA, Luca, I-10143 Torino (IT)
(74) Representative: Notaro, Giancarlo
(86) International application number: PCT/IB2012/057427
(87) International publication number: WO 2013/093774

(56) References cited:
- EP-A1- 0 820 920
- FR-A1- 2 496 040
- FR-A1- 2 714 348
- NL-A- 7 602 569
- US-A- 3 827 773
- US-A- 3 989 327
- US-A- 4 080 020

## Description

The present invention relates to a stationing unit for parking motorcycles, or, in a dimensionally reduced version, for parking mopeds and bicycles, and an equipped area comprising a plurality of such stationing units.

A drawback often felt by motorcyclists, above all by those who use high-powered motorcycles for touring, is represented by the impossibility of leaving in a supervised and secure place, once they have reached their destination, not only the motorcycle, but also the luggage contained therein, the helmets and the frequently cumbersome and heavy equipment (such as, for example, back protectors and jackets) worn during the trip. The total value of all the aforesaid belongings may be considerable, and this often induces the motorcyclist to take them along with him, given that the possible boot or undersaddle compartment of the motorcycle do not offer a sufficient safety against effraction and have a relatively limited capacity. This results in an inconvenience for the motorcyclist when he wants to walk around the place that he wants to visit. The consequence is that frequently the motorcyclist reduces to a minimum the duration of his stay in the place he is visiting, with an economic damage for the tourist economy of the places visited. A similar situation arises in rest areas along roads and motorways where, for fear of theft, motorcyclists prefer to take a snack around their vehicle, instead of eating in the restaurant in the service area. The same problem arises in towns for users of scooters or mopeds, who find it inconvenient to walk around in the old-town centre or inside commercial centres carrying along with them helmets and heavy accessories. This leads also to the further drawback that the motorcyclists who move around in a town or residential area frequently prefer not to wear adequate protective clothing, the proof of this being that all the statistics identify urban centres as the places with the highest number of accidents and greatest damage to users of motorcycles and scooters.

A stationing unit according to the preamble of claim 1 is known from any of documents US 3 827 773 A, US 4 080 020 A, US 3 989 327 A.

The object of the invention is to propose a new, simple, and functional solution to the problems set forth above.

In particular, a main object of the invention is to provide urban parking areas with adequate stationing units for accommodating the equipment of motorcyclists so as to favour and incentivize use of safety clothing and life-saving protective means, such as the back protector.

A further object of the invention is to propose stationing units that will enable the motorcyclist to anchor the motorcycle to the ground even in very small spaces, which would be, instead, inaccessible to automobiles, and to accommodate the helmets and the equipment in a secure and protected way.

Yet a further object is to propose a solution that will enable also provision of an electric-power socket to be used for charging the batteries of electric-powered motorcycles and bicycles.

With a view to achieving the above objects, the subject of the invention is a stationing unit for parking motorcycles, or, in a dimensionally reduced version, mopeds and bicycles, having the features of claim 1..

The locker may be provided with an electronic anti-effraction safety system of its own.

The subject of the invention is also a parking area comprising a plurality of stationing units of the type indicated above.

As may be readily understood, the present invention is of direct interest for users of motorcycles, mopeds, and bicycles, in so far as it provides them with a solution for the problems that have been mentioned at the beginning of the present description, but is moreover of indirect interest for public administrations, which can encourage the tourist industry in the places under their jurisdiction, through the provision of equipped areas with stationing units according to the invention so as to enable motorcyclists who are visiting the aforesaid places to leave, without any worries, their own motorcycle anchored in a secure place and their personal belongings, clothing, helmets, and so forth, likewise protected inside the aforesaid locker forming part of the stationing unit. There may be provided pay-as-you-enter parking areas, or else the stationing units according to the invention may, for example, be provided where there are already present pay-and-display parking areas, associating to the locker of each stationing unit a parking meter, or even just simply a window in which to insert, before closing the locker, the coupon issued by a centralized parking meter (as envisaged in Italy in the town areas delimited by blue lines).

Of course, the configuration of the anchorage device may be any whatsoever, according to the specific requirements of application, without prejudice to the basic principle of the invention.

For example, the above anchorage means may comprise an anchorage member, for example in the form of a cable or chain, which has the purpose of securing a wheel or some other part of the cycle to said anchorage structure and terminates with a portion that can be secured to the locker in a condition in which the door is blocked in its closed position so that said anchorage member performs both the function of anchorage for the cycle and the function of blocking of the locker in the closed condition.

Once blocking of the motorcycle and closing of the locker has been carried out, the vehicle and the contents of the locker are protected against theft by the padlock.

If so preferred, there may moreover be envisaged an electronic protection, by means of sensors for detecting cutting of the cable/chain and anti-effraction sensors for the locker.

The invention will now be described with reference to the annexed sheets of drawings, which are provided purely by way of non-limiting example and in which:
- Figure 1 is a perspective view of an example of embodiment of the invention, illustrated in an inoperative condition, in which the structure designed to receive the wheel of the motorcycle is in the raised position;
- Figure 2 is a perspective view of the device of Figure 1 in an operative condition in which the structure that is to receive the wheel of the motorcycle is lowered so that the door of the locker can be opened in order to stow away objects inside the locker;
- Figures 3 and 4 are two further perspective views that illustrate two successive steps of the operation of anchorage of the motorcycle to the stationing unit;
- Figure 4A shows at an enlarged scale a detail of Figure 4;
- Figure 5 shows in perspective view a variant of the device according to the invention, suitable for parking mopeds or bicycles;
- Figure 6 is a perspective view at an enlarged scale of the detail of the locker of the device of Figure 5, with the door open; and
- Figures 7 and 8 are front and rear perspective views of a further variant.

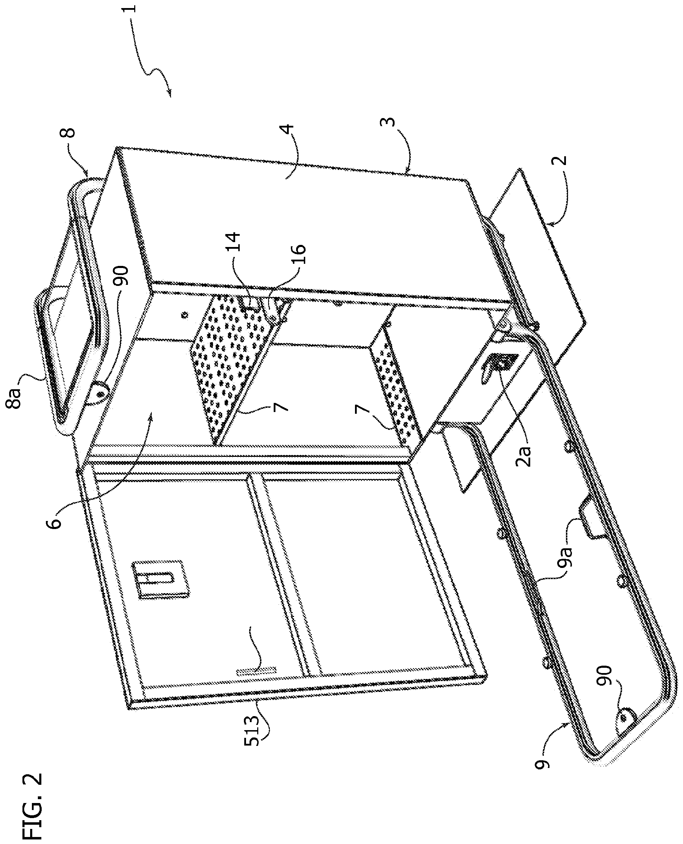

With reference to the annexed drawings, number 1 generally designates a stationing unit for parking a motorcycle, comprising a fixed base structure 2 designed to be anchored to the ground in an area provided for parking. Fixed on the base structure 2 is a locker, generally designated by the reference number 3, having a fixed structure 4, for example made of sheet metal or any other material suitable for the purpose, and a door 5, which can be opened to enable access to an internal space 6 (Figure 2), equipped with one or more shelves 7, for example made of sheet metal and having aeration holes.

The fixed structure 2 includes a base part and, in the case of the example illustrated, a metal tubular frame 8 that extends along the rear wall of the locker 3 and then on its top wall, with a part 8a.

Connected to the bottom part of the fixed structure 2 in an articulated way about a horizontal axis (not illustrated) is a structure 9 for anchorage of a wheel R or some other part of the motorcycle, designed to receive the wheel itself (or any other part) of the motorcycle. In the example illustrated, the anchorage structure 9 is constituted by a tubular frame.

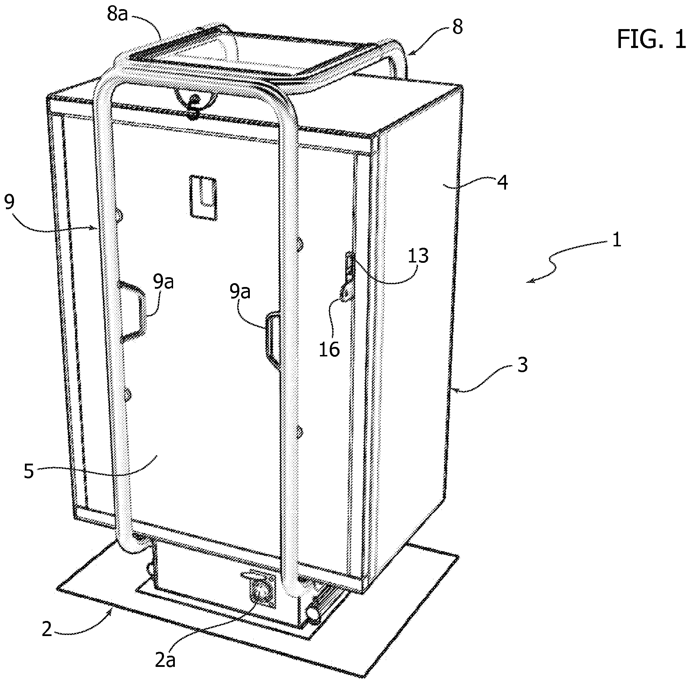

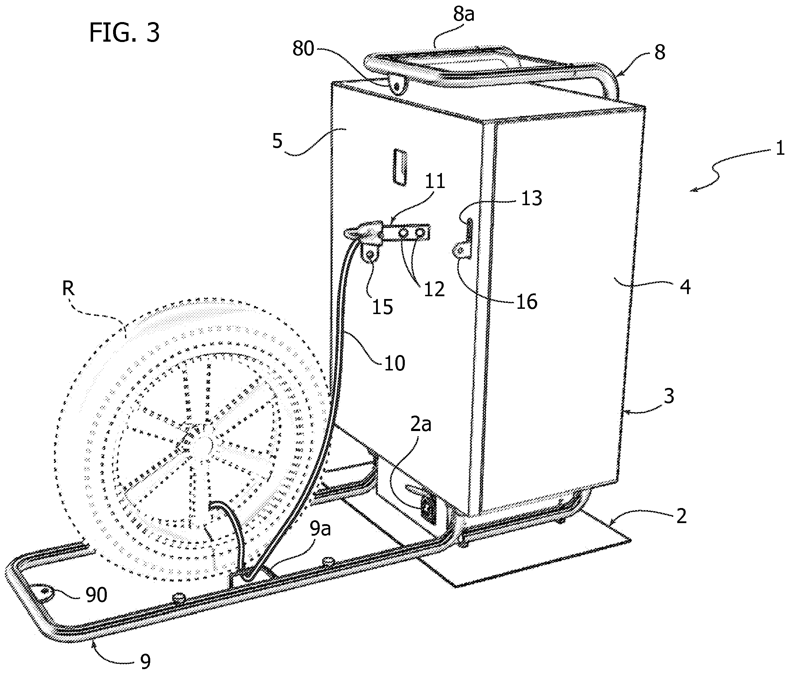

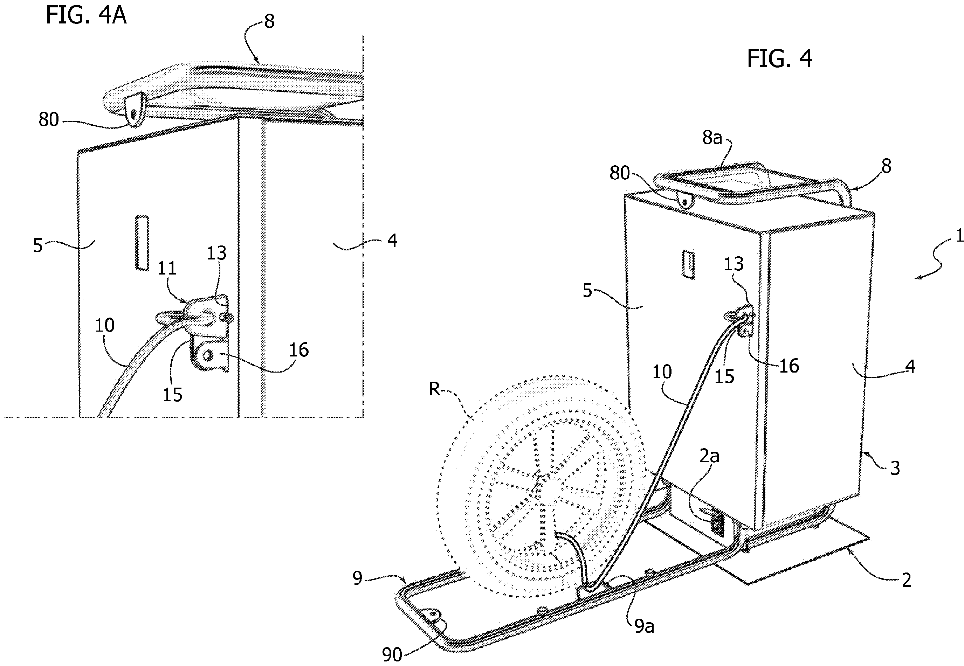

With reference to Figures 1 and 2, the frame 9 can be displaced between a raised inoperative position and a lowered operative position, in which the frame 9 is pre-arranged for receiving the wheel R of the motorcycle (see Figures 3 and 4, where for simplicity just the wheel R has been illustrated, without the motorcycle).

In the inoperative position of the frame 9, two lock plates 80, 90 carried by the frames 8 and 9, respectively, are juxtaposed. If so desired, for example in the case of a pay-and-display stationing unit, in which, when the frame 9 is raised, use of the locker must be prevented, it may be envisaged that the lock plates 80, 90 can be blocked to one another with any suitable device.

In the operative condition illustrated in Figure 2, the locker can be opened so that the user can stow away his personal belongings and travelling equipment.

Figure 3 shows the next step, in which the wheel R of the motorcycle is received in the space delimited by the frame 9. The wheel R is secured to the frame 9 by means of a cable or chain anchorage device, of any know type and designated by 10.

In the case of the example illustrated, one end of the cable 10 is permanently secured to a first loop 9a of one of the branches of the frame 9, but said cable can even form an integral part of the stationing unit and be anchored to the frame 9 in any other way. The cable 10 is made to pass through the spokes of the wheel R (or through any other part of the motorcycle) and through a second loop 9a of the frame 9 set on the opposite side of the wheel. The end of the cable 10 opposite to the one anchored to the frame 9 terminates with a bolt member 11 constituted by an elongated plate, having one or two holes 12. The bolt member 11 is inserted, with the door 5 in a closed condition, through a slit 13 in the door 5 and then inside a seat 14 provided in the locker 3. The locker is moreover preferably provided inside with a spring-biassed ball element (not illustrated) designed to snap into one of the holes 12 when the member 11 is inserted in the seat 14. Said element has the sole function of providing a reference ensuring that the member 11 is in the inserted position, but does not prevent extraction of said member 11 from its seat 14. In the closed condition of the door, with the member 11 in its position inserted inside the slit 13 and the seat 14, a plate 15 projecting laterally from the member 11 is set alongside a plate 16 fixed to the fixed part of the locker (Figure 2) and projecting through the slit 13 (Figures 3, 4A). The plates 15, 16 set alongside one another have mating holes for engagement of any padlock device, for example an anti-theft padlock normally used for blocking a brake disk of the motorcycle.

In the case of the example illustrated, the base 2 comprises an electric-power socket 2a that can be used for charging the battery of an electric-powered motorcycle or scooter.

Thanks to the characteristics described above, the device according to the invention enables the user to block simultaneously the motorcycle in a condition where it is secured to the structure of the device and the door 5 of the locker in a closed condition.

There may be envisaged a self-supplied electronic alarm system, provided with anti-effraction sensors fixedly applied to the structure of the locker, as well as an anti-cutting alarm device for the chain or cable. The electronic protection system (optional) is provided with a long-life battery-supplied electronic control unit, an electronic siren, a LED flasher for issuing a warning of an attempt at theft/effraction. The electronic system is always activated in so far as, via the calibration of the sensors, it is possible to discriminate opening and use of the locker from an attempt at effraction. The system may be expanded and integrated with a local or remote video-surveillance system, with recording of events.

All the aforesaid additional elements are not illustrated in the drawings, both in so far as they may be provided in any known way and in so far as their elimination from the drawings renders the latter more readily and easily understandable.

The invention also regards an equipped parking area for motorcycles, including an array of devices of the type illustrated above, and possibly provided with a pay-as-you-enter system.

The device according to the invention may present a transportable modular structure that can be mounted easily and rapidly, for example also at fairs or temporary events.

As has been mentioned more than once, the solution described herein represents just one example from among the innumerable possible embodiments, without prejudice to the fact that the basic principle underlying the invention is to envisage the following basic components:
- a fixed structure designed to be anchored to the ground in an area provided for parking;
- a locker for housing objects, rigidly connected to the fixed structure and having a door for access to a space for housing objects;
- a structure suitable for receiving a wheel, or some other part, of the motorcycle, and connected to said fixed structure; and
- anchorage means for securing the wheel, or some other part, of the motorcycle to the aforesaid structure that receives it, and for blocking the door of the locker in its closed position.

Preferably, said anchorage means comprise an anchorage member, such as, for example, the cable of Figures 1-4, designed to perform both the function of anchorage of the vehicle and the function of blocking of the door.

The outer surface of the locker of the stationing unit according to the invention may be used totally or in part for affixing advertisements, using panels or any other suitable support.

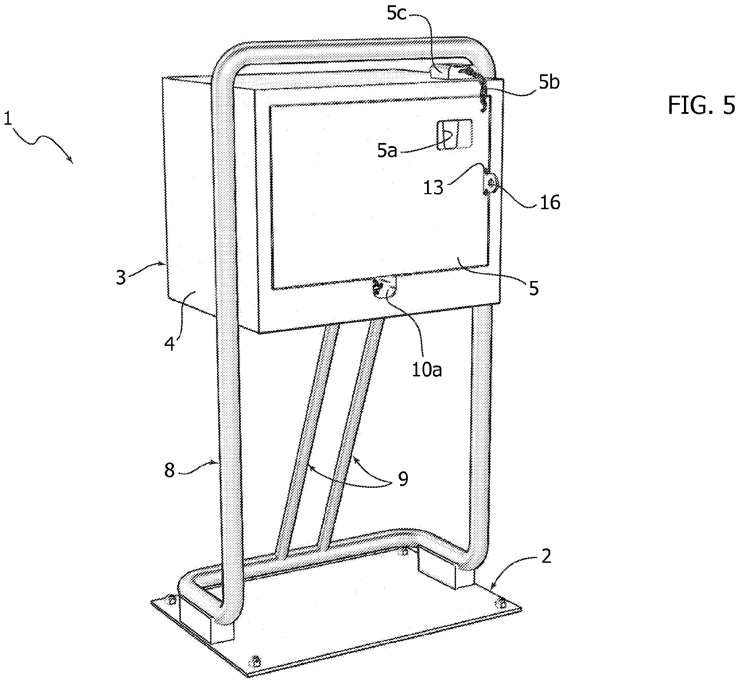

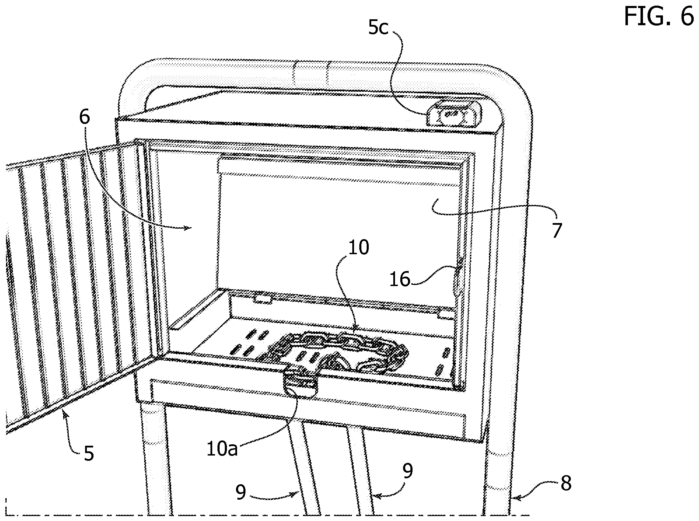

Figures 5 and 6 illustrate an example of a variant of the device of the invention designed for parking a moped or a bicycle. In said figures, the parts corresponding to those illustrated in Figures 1-4 are designated by the same reference numbers.

In the case of said variant, the locker 3 has a configuration of smaller dimensions and is supported in a raised position by the tubular frame 8, which is anchored to the base 2 fixed to the ground. The anchorage structure designed to receive a wheel of the moped or bicycle is rigidly connected to the frame 8 and is defined by two inclined and parallel bars 9 that extend from a bottom cross member of the frame 8 to the bottom wall of the locker 3. Consequently, in this case, the structure 9 is not movable between an inoperative position and an operative position as in the case of the embodiment of Figures 1-4.

Inside the locker 3 in this case a chain 10 is provided, which has one end anchored to the internal structure of the locker. The chain may be made to come out of the locker 3 through an opening 10a made in the front wall of the locker immediately underneath the door 5 and is used for anchoring the vehicle to the device, causing it to pass, for example, between the spokes of a wheel or through another part of the moped or bicycle. The opposite end is anchored to the plate 16, which also in this case is provided on the locker, after the door 5 has been closed, with the plate 16 projecting outwards through a slit 13 made in the door 5. Also in this case, the chain 10 is secured to the plate 16 by means of a padlock of any type (not illustrated) that engages a hole made in the plate 16. Also in this case, hence, the anchorage member 10 performs both the function of securing the vehicle and the function of blocking the locker in the closed condition.

In the case where the device is provided in a pay-and-display parking area, of the type in which a dispenser of parking tickets is provided, the ticket can be set in a pocket on the inside of the door 5 so as to remain visible from outside through a window 5a of the door.

To encourage users to close the door before leaving the stationing unit, the door is provided with a short chain 5b terminating with a key inserted in a coin-operated lock 5c, of the type normally used for anchoring supermarket carts together. The details of said device are not illustrated herein, given that they can be provided in any known way.

When the user arrives to park his vehicle, he inserts a coin in the coin-operated lock 5c so that he can open the door 5 and stow away his equipment in the locker 3. A wheel of the moped or bicycle is received between the bars 9 and is anchored by means of the chain 10, which is then blocked by means of the padlock to the plate 16 of the locker after the door 5 has been closed again so as to block it in the aforesaid condition. The user can at this point re-insert the key carried on the chain 5b inside the coin-operated device 5c to recover the coin, and can hence leave the vehicle in the stationing unit. When he returns, he releases the padlock that withholds the chain 10 and re-inserts a coin in the coin-operated lock 5c so as to be able to open the locker and take out his equipment. Before going away, the user closes the door 5 again and inserts the key in the coin-operated lock device 5c to recover his coin. In this way, the unused stationing unit has the locker 3 always closed, with the inside protected from any adverse weather conditions.

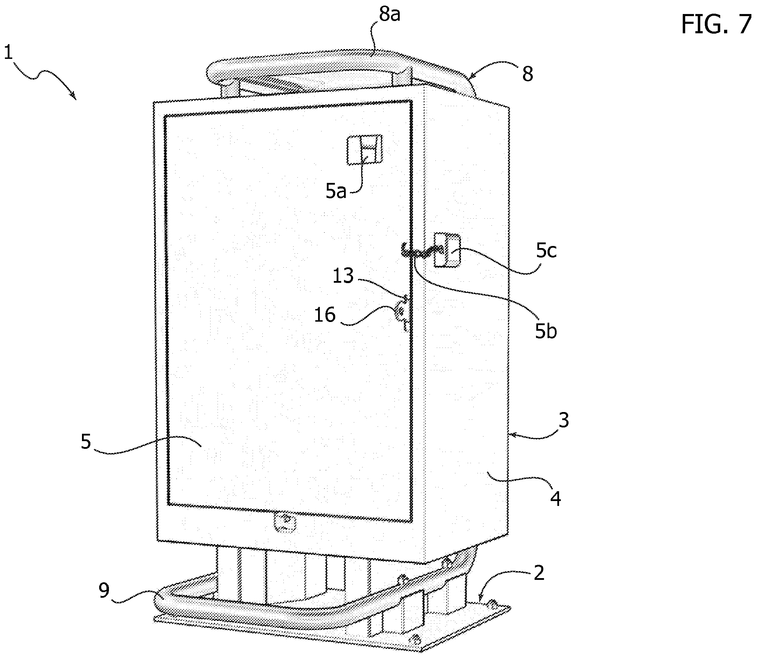

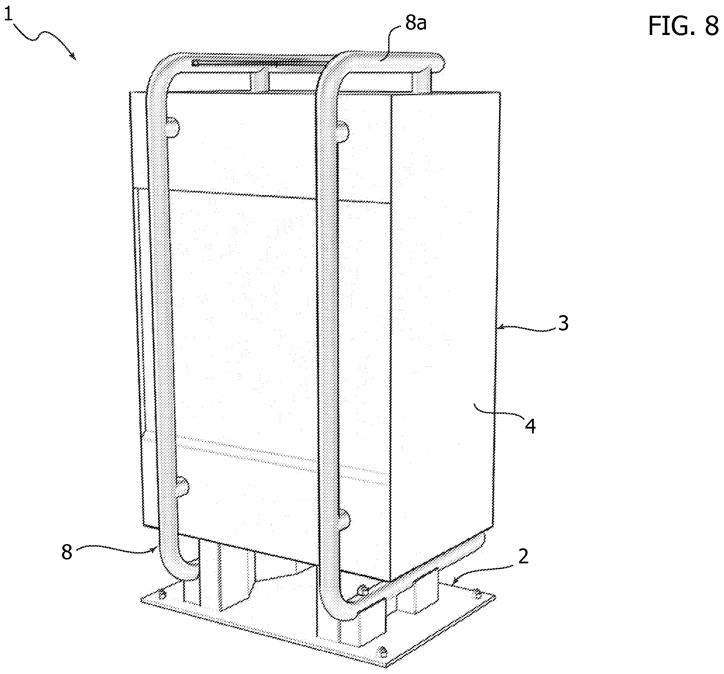

Figures 7 and 8 show a further variant of the device of the invention for parking a motorcycle, which has a locker of relatively large dimensions. In these figures, the parts corresponding to those of Figures 5 and 6 are designated by the same reference numbers. In this case, the anchorage structure 9 is simply constituted by a bottom bar 9 forming part of the tubular frame 8. Otherwise, the device is conceptually identical to that of Figures 5 and 6.

Naturally, without prejudice to the principle of the invention, the details of construction and the embodiments may vary widely with respect to what has been described and illustrated herein purely by way of example, without thereby departing from the scope of the present invention.

## Claims

1. A stationing unit for parking a motorcycle, moped or bicycle comprising:
- a fixed structure (2) designed to be anchored to the ground in an area provided for parking;
- a locker (3) rigidly connected to the fixed structure (2) and having a door (5) for access to a containing space (6);
- a structure (9) for anchorage of a wheel (R), or some other part, of the cycle, connected to said fixed structure (2); and
- anchorage means (10) for securing the wheel (R), or some other part, of the cycle to the aforesaid anchorage structure, and for blocking the door (5) of the locker (3) in its closed position,
- wherein said anchorage means comprise an anchorage member (10), for example in the form of a cable or chain, which has the purpose of securing a wheel (R) or some other part of the cycle to said anchorage structure (9) and terminates with a portion that can be secured to the locker (3) in a condition in which the door (5) is blocked in its closed position so that said anchorage member performs both the function of anchorage of the cycle and the function of blocking the locker (3) in the closed condition,
**characterized in that** in order to encourage a user to close the door (5) before leaving the stationing unit, said locker (3) is provided with a coin-operated lock device (5c) for withholding a key connected to the door (5), in such a way as to enable release of the key and opening of the door (5) only in the presence of a coin or token inside the coin-operated lock, so that, after use, before leaving said stationing unit, the user must close the door (5) again and insert the key in the coin-operated lock device (5c) in order to recover said coin or token.

2. The stationing unit according to Claim 1, **characterized in that** the structure (9) for anchorage of a wheel (R), or some other part, of the cycle, can be displaced between an inoperative position, in which it prevents opening of the door (5) of the locker (3), and an operative position, ready for receiving the wheel (R).

3. The stationing unit according to Claim 1, **characterized in that** the locker has a plate (16) projecting outwards through a slit (13) of the door (5) in the closed condition of the door (5), for connection of said anchorage member to said plate (16) with consequent blocking of the door (5) in the closed condition.

4. The stationing unit according to any one of the preceding claims, **characterized in that** the door has a window (5a) for exhibiting a ticket that can be inserted in an internal pocket of the door (5).

5. The stationing unit according to Claim 1, **characterized in that** the external surface of the locker (3) carries advertising messages.

6. The stationing unit according to Claim 1, **characterized in that** said fixed structure (2) includes a base part (2) to be fixed to the ground and a metal tubular frame (8) connected to said base part (2) and supporting said locker (3) in a raised position.

7. The stationing unit according to Claim 6, **characterized in that** said anchorage metal tubular frame (8) including two inclined and parallel bars (9) that extend from a bottom cross member of the frame (8) to a bottom wall of the locker (3).

8. An equipped parking area, comprising a plurality of stationing units according to any of the preceding claims.

## Patentansprüche

1. Stationierungseinheit zum Einparken eines Motorrads, eines Mopeds oder eines Fahrrads, mit:
- einer fixierten Struktur (2), die dafür geeignet ist, auf dem Boden in einem Bereich, der für das Parken vorgesehen ist, verankert zu werden;
- einem Schrank (3), der starr mit der fixierten Struktur (2) verbunden ist und eine Tür (5) zum Zugang zu einem Lagerbereich (6) aufweist;
- einer Struktur (9) zum Vertäuen eines Rads (R) oder eines anderen Teils des Zweirads, wobei die Struktur mit der fixierten Struktur (2) verbunden ist; und
- einer Vertäuungseinrichtung (10) zum Befestigen des Rads (R) oder eines anderen Teils des Zweirads an der Vertäuungsstruktur und zum Verriegeln der Tür (5) des Schranks (3) in der geschlossenen Stellung,
- wobei die Vertäuungseinrichtung ein Vertäuungselement (10), beispielsweise in Form eines Seils oder einer Kette aufweist, das den Zweck hat, das Rad (R) oder ein anderes Teil des Zweirads an der Vertäuungsstruktur (9) zu befestigen, und das mit einem Bereich abschließt, der an dem Schrank (3) in einem Zustand befestigbar ist, in welchem die Tür (5) in ihrer geschlossenen Stellung verriegelt ist derart, dass das Vertäuungselement sowohl die Funktion des Vertäuens des Zweirads und die Funktion des Verriegeins des Schranks (3) in dem geschlossenen Zustand übernimmt,
**dadurch gekennzeichnet, dass** zur Ermutigung eines Benutzers zum Schließen der Tür (5) vor dem Verlassen der Stationierungseinheit der Schrank (3) mit einer durch Münze betriebene Verschlusseinrichtung (5c) zum Zurückhalten eines Schlüssels, der mit der Tür (5) verbunden ist, versehen ist derart, dass eine Freigabe des Schlüssels und ein Öffnen der Tür (5) nur in Anwesenheit einer Münze oder Wertmarke im Inneren des durch Münze betriebenen Verschlusses ermöglicht wird derart, dass nach der Verwendung vor dem Verlassen der Stationierungseinheit der Benutzer die Tür (5) wieder verschließen muss und den Schlüssel in die durch Münze betriebene Verschlusseinrichtung (5c) einführen muss, um die Münze oder die Wertmarke wieder zu erhalten.

2. Stationierungseinheit nach Anspruch 1, **dadurch gekennzeichnet, dass** die Struktur (9) zur Vertäuung eines Rads (R) oder eines anderen Teils des Zweirads zwischen einer inaktiven Stellung, in der sie ein Öffnen der Tür (5) des Schranks (3) verhindert, und einer aktiven Stellung, die für die Aufnahme des Rads (R) geeignet ist, verschiebbar ist.

3. Stationierungseinheit nach Anspruch 1, **dadurch gekennzeichnet, dass** der Schrank eine Platte (16) aufweist, die durch einen Schlitz (13) der Tür (5) im geschlossenen Zustand der Tür (5) nach außen hervorsteht, um das Vertäuungselement mit der Platte (16) bei gleichzeitigem Verriegeln der Tür (5) in der geschlossenen Stellung zu verbinden.

4. Stationierungseinheit nach einem der vorhergehenden Ansprüche, **dadurch gekennzeichnet, dass** die Tür ein Fenster (5a) zur Darstellung eines Tickets hat, das in eine interne Ausstülpung der Tür (5) einführbar ist.

5. Stationierungseinheit nach Anspruch 1, **dadurch gekennzeichnet, dass** die Außenfläche des Schranks (3) Werbung aufweist.

6. Stationierungseinheit nach Anspruch 1, **dadurch gekennzeichnet, dass** die fixierte Struktur (2) ein Basisteil (2), das an dem Boden zu befestigen ist, und einen Metallrohrrahmen (8) aufweist, der mit dem Basisteil (2) verbunden ist und den Schrank (3) in einer angehobenen Stellung hält.

7. Stationierungseinheit nach Anspruch 6, **dadurch gekennzeichnet, dass** der Vertäuungsmetallrohrrahmen (8) zwei geneigte und parallele Stäbe (9) aufweist, die sich von einem Bodenquerelement des Rahmens (8) zu einer Bodenwand des Schranks (3) erstrecken.

8. Ausgestatteter Parkbereich mit mehreren Stationierungseinheiten nach einem der vorhergehenden Ansprüche.

## Revendications

1. Unité de stationnement pour le stationnement d'un motocycle, d'un cyclomoteur ou d'une bicyclette comprenant :
- une structure fixe (2) conçue pour être ancrée au sol dans une zone prévue pour le stationnement ;
- un casier (3) relié de manière rigide à la structure fixe (2) et ayant une porte (5) pour accéder à un espace de réception (6) ;
- une structure (9) pour l'ancrage d'une roue (R), ou d'une autre partie, du cycle, reliée à ladite structure fixe (2) ; et
- un moyen d'ancrage (10) pour fixer la roue (R), ou une autre partie, du cycle à la structure d'ancrage précitée, et pour bloquer la porte (5) du casier (3) dans sa position fermée,
- dans laquelle ledit moyen d'ancrage comprend un élément d'ancrage (10), par exemple sous la forme d'un câble ou d'une chaîne, qui a pour objet de fixer une roue (R) ou une autre partie du cycle à ladite structure d'ancrage (9) et se termine par une partie qui peut être fixée au casier (3) dans un état dans lequel la porte (5) est bloquée dans sa position fermée de sorte que ledit élément d'ancrage réalise à la fois la fonction d'ancrage du cycle et la fonction de blocage du casier (3) dans l'état fermé,
**caractérisée en ce que** pour encourager un utilisateur à fermer la porte (5) avant de quitter l'unité de stationnement, ledit casier (3) est pourvu d'un dispositif de serrure (5c) actionné par une pièce de monnaie pour retenir une clé reliée à la porte (5), de manière à ne permettre le déblocage de la clé et l'ouverture de la porte (5) qu'en présence d'une pièce de monnaie ou d'un jeton à l'intérieur de la serrure actionnée par une pièce de monnaie, de sorte que, après utilisation, avant de quitter ladite unité de stationnement, l'utilisateur doive fermer la porte (5) à nouveau et insérer la clé dans le dispositif de serrure (5c) actionné par une pièce de monnaie afin de récupérer ladite pièce de monnaie ou ledit jeton.

2. Unité de stationnement selon la revendication 1, **caractérisée en ce que** la structure (9) pour l'ancrage d'une roue (R), ou d'une autre partie, du cycle, peut être déplacée entre une position inactive, dans laquelle elle empêche l'ouverture de la porte (5) du casier (3), et une position fonctionnelle, prête à recevoir la roue (R).

3. Unité de stationnement selon la revendication 1, **caractérisée en ce que** le casier a une plaque (16) faisant saillie vers l'extérieur à travers une fente (13) de la porte (5) dans l'état fermé de la porte (5), pour la liaison dudit élément d'ancrage à ladite plaque (16) avec pour conséquence un blocage de la porte (5) dans l'état fermé.

4. Unité de stationnement selon l'une quelconque des revendications précédentes, **caractérisée en ce que** la porte a une fenêtre (5a) pour présenter un ticket qui peut être inséré dans une poche interne de la porte (5).

5. Unité de stationnement selon la revendication 1, **caractérisée en ce que** la surface externe du casier (3) porte des messages publicitaires.

6. Unité de stationnement selon la revendication 1, **caractérisée en ce que** ladite structure fixe (2) comporte une partie de base (2) à fixer au sol et un cadre tubulaire métallique (8) relié à ladite partie de base (2) et supportant ledit casier (3) dans une position relevée.

7. Unité de stationnement selon la revendication 6, **caractérisée en ce que** ledit cadre tubulaire métallique d'ancrage (8) comporte deux barres inclinées et parallèles (9) qui s'étendent à partir d'un élément transversal inférieur du cadre (8) jusqu'à une paroi inférieure du casier (3).

8. Zone de stationnement équipée, comprenant une pluralité d'unités de stationnement selon l'une quelconque des revendications précédentes.
